# EUROPÄISCHE PATENTSCHRIFT

(11) **EP 0 631 811 B1**
(45) Veröffentlichungstag und Bekanntmachung des Hinweises auf die Patenterteilung: **18.03.1998**
(21) Anmeldenummer: 94110132.1
(22) Anmeldetag: 29.06.1994
(51) Int. Cl.: B01J 2/20, B30B 11/22

(54) **Schneidwerkzeug für eine Extrusionsmaschine**
Cutting element for an extrusion device
Elément de découpage pour machine d'extrusion

(30) Priorität: 30.06.1993 DE 4321772
(43) Veröffentlichungstag der Anmeldung: 04.01.1995
(73) Patentinhaber: EMIL LIHOTZKY Maschinenfabrik, D-94447 Plattling (DE)
(72) Erfinder: Czarnetzki, Robert Gregor, D-94469 Deggendorf (DE)
(74) Vertreter: Weber, Otto Ernst, Dipl.-Phys.

(56) Entgegenhaltungen:
- WO-A-90/03217
- DE-A- 4 028 558
- FR-A- 2 056 570
- FR-A- 2 515 934
- PATENT ABSTRACTS OF JAPAN vol. 12, no. 299 (C-520) 15. August 1988 & JP-A-63 071 164 (HASHIZUME SHINJI) 31. März 1988

## Beschreibung

Die Erfindung betrifft ein Schneidwerkzeug für eine Extrusionsmaschine, insbesondere zur Extrusion von chemischen Granulaten, vorzugsweise für Waschmittel, mit einem im Bereich einer Material-Austrittsöffnung angeordneten Formwerkzeug, dem das drehbar gelagerte Schneidwerkzeug zugeordnet ist, welches nach Art eines Flügelrades ausgebildet ist, bei dem mehrere Messerklingen an einer Messerhalterung angebracht und unter einer ebenen Auflagefläche des Formwerkzeugs auf einer Kreisbahn entlangführbar sind. Schneidwerkzeuge dieser Art sind z.B. aus DE-A-4028558 oder FR-A-2056570 bekannt.

Bei derartigen bekannten Extrusionsmaschinen wird mit Hilfe einer Extrusionspresse Material durch Öffnungen hindurchgepreßt, die in dem Formwerkzeug ausgebildet sind. Der Durchmesser dieser Öffnungen kann beispielsweise in der Größenordnung von einem Millimeter liegen.

Das Schneidwerkzeug dient bei einer derartigen Maschine dem Zweck, das Material, beispielsweise Waschpulver, nach dem Austritt aus dem Formwerkzeug auf eine vorgegebenen Länge abzuschneiden. Auf diese Weise entsteht ein Granulat, welches aus kleinen zylinderförmigen Teilchen besteht, deren Länge in der Größenordnung von einem Millimeter liegen kann.

In Abhängigkeit von der Zusammensetzung des Materials können unterschiedliche Material-Eigenschaften auftreten. Häufig ist das Material stark klebrig. Es besteht dann die Gefahr, daß das Material, anstatt ohne weiteres in ein Ausfallrohr hineinzufallen, an den Wänden des Ausfallrohres und/oder am Schneidwerkzeug haftenbleibt. Es kann unter Umständen eine so große Menge von Material an den Wänden des Ausfallrohres haften bleiben, daß im Produktionsablauf erhebliche Störungen auftreten. Es kann nämlich das Material an der Wand des Ausfallrohres zu einem Materialgebirge aufwachsen, welches bis in den Bereich des rotierenden Schneidwerkzeuges hineinragt. Dadurch kann es sogar zu Beschädigungen oder einer regelrechten Zerstörung des Schneidwerkzeuges kommen. Unter Umständen muß dann die Produktion unterbrochen werden, um das Ausfallrohr zu reinigen.

Natürlich muß die Produktion erst recht dann unterbrochen werden, wenn das Schneidwerkzeug beschädigt oder zerstört ist. Das Schneidwerkzeug muß dann nämlich sofort ausgewechselt werden.

Dazu muß die Extrusionspresse zunächst angehalten werden, das Ausfallrohr muß gereinigt werden, und es muß gegebenenfalls das Schneidwerkzeug ausgebaut und gegen ein neues Schneidwerkzeug ausgetauscht werden. Anschließend muß die Produktion dann wieder angefahren werden. Dieser Anfahrprozeß führt jedoch zunächst zu einem gewissen Produktionsausschuß, denn es dauert eine bestimmte Zeit, bis durch entsprechende Einstellung des gesamten Verfahrensablaufs die gewünschte Produkt-Qualität nach dem Anfahren wieder erreicht ist.

Zur Extrusion von Waschmitteln gibt es beispielsweise Herstellungsverfahren, bei denen zunächst Trockenstoffe abgewogen werden und anschließend über mehrere Stockwerke zu einem Mischer transportiert werden. Dort werden verschiedene Flüssigkeiten pulvrigen Stoffen zugesetzt. Das Gemisch wird dann dem Extruder zugeführt. Muß nun, bedingt durch ein verschmutztes Ausfallrohr, der Fertigungsprozeß unterbrochen werden, so verbleibt im Mischer eine Charge des Produktes. Dieses Produkt weist nach einer gewissen Produktionspause hinsichtlich Konsistenz und Zusammensetzung nicht mehr die gewünschten Eigenschaften auf. Wenn die Fertigung wieder angefahren wird, ist nicht wieder sofort die erwünschte Produkt-Qualität erreichbar, so daß über eine gewisse Zeitspanne Ausschuß produziert wird.

Das Anheften von Material am Ausfallrohr führt daher nicht nur zu einem Produktionsausfall, während das Ausfallrohr gereinigt wird, sondern darüber hinaus auch zu einem erheblichen Produktionsverlust beim erneuten Anfahren der Extrusionsmaschine.

Der Erfindung liegt die **Aufgabe** zugrunde, ein Schneidwerkzeug der eingangs näher genannten Art zu schaffen, durch welches die Fallrichtung des geschnittenen Produktes in der Weise günstig beeinflußt werden kann, daß das Produkt auf seiner Bahn unter dem Schneidwerkzeug von den Wänden des Ausfallrohres weitgehend ferngehalten wird.

Zur Lösung dieser Aufgabe sieht die Erfindung vor, daß die Schneidkanten der Messerklingen eine Vorpfeilung aufweisen. Gemäß der Erfindung ist der wesentliche Vorteil erreichbar, daß jeglicher Stillstand der Produktion und die mit dem erneuten Anfahren der Produktion verbundenen Nachteile vermieden werden. Es haftet nämlich bei der erfindungsgemäßen Ausbildung des Schneidwerkzeugs praktisch kein Material mehr am Ausfallrohr an, welches den Produktionsablauf stören würde, so daß gemäß der Erfindung der Schneidvorgang nicht mehr behindert wird und dadurch kein Stillstand der Produktion mehr verursacht werden kann.

Durch die erfindungsgemäße Ausbildung und Anordnung der Schneidkanten der Messerklingen, d.h. durch die Vorpfeilung bekommen die einzelnen Teilchen, welche durch die Messerklingen geschnitten werden, offenbar in überraschender Weise einen Impuls in einer Richtung, die gegenüber einer tangentialen Richtung zum Drehpunkt des Schneidwerkzeugs hin verläuft. Mit anderen Worten, obwohl jeder Punkt einer Messer-Schneidkante auf einer Kreisbahn geführt wird und daher eigentlich zu erwarten wäre, daß unabhängig vom Pfeilwinkel der Schneidkanten die geschnittenen Teilchen im wesentlichen tangential abgeschleudert werden, tritt gemäß der Erfindung der überraschende Effekt auf, daß die geschnittenen Teilchen in den zentralen Bereich des Ausfallrohres gerichtet werden. Dadurch bleibt die Wand des Ausfallrohres weitgehend sauber.

Gemäß einer bevorzugten Ausführungsform des Erfindungsgegenstandes ist vorgesehen, daß die Schneidkanten geradlinig ausgebildet sind, so daß der Vorpfeil-Winkel (β) über die Längsausdehnung der Schneidkanten konstant ist. Bei einer derartigen Ausführungsform des Erfindungsgegenstandes hat Sich gezeigt, daß die Innenwand des Ausfallrohres besonders sauber bleibt.

Es hat sich im praktischen Betrieb eine Ausführungsform des Erfindungsgegenstandes als vorteilhaft erwiesen, welche sich dadurch auszeichnet, daß der Vorpfeil-Winkel im Bereich von Null bis 20 Grad liegt. Dabei kann vorzugsweise vorgesehen sein, daß der Vorpfeil-Winkel etwa 10 Grad beträgt. Bei einer derartigen Anordnung wird erreicht, daß auch bei schwankender Konsistenz und unterschiedlichen Eigenschaften des verarbeiteten Produktes der erwünschte Effekt eintritt, daß nämlich die Innenwand des Aufallrohres sauber bleibt.

Eine weitere vorteilhafte Ausgestaltung des Erfindungsgegenstandes sieht vor, daß die Messerklingen einen Anstellwinkel aufweisen. Dadurch wird die Luftströmung im Bereich des Schneidwerkzeuges und im Bereich unterhalb vom Schneidwerkzeug günstig beeinflußt, mit dem Ergebnis, daß bei unterschiedlichen Arbeitsbedingungen der erwünschte Effekt, Material vom Ausfallrohr fernzuhalten, mit besonders großer Zuverlässigkeit erreicht wird.

Weiterhin kann vorzugsweise vorgesehen sein, daß die Messerklingen als dünne ebene Platten ausgebildet sind. Derartige Messerklingen können hinreichend elastisch ausgebildet sein, so daß sie sich während des Betriebes aufgrund der auf die Messerklingen wirkenden Kräfte an das Formwerkzeug gerade fest genug anlegen, daß die Messerschneiden permanent nachgeschliffen werden, dabei jedoch kein unnötiger Reibungswiderstand entsteht.

Gemäß einer weiteren besonderen Ausführungsform des Erfindungsgegenstandes ist vorgesehen, daß die Messerklingen in ihrer Grundrißform radial nach außen verjüngt ausgebildet sind. Bei dieser Ausführungsform weisen die Messerklingen zwar eine hinreichende Stabilität und/oder Festigkeit auf, es wird jedoch zugleich ihre Elastizität so vergrößert, daß eine erwünschte Anlage an dem Formwerkzeug im Hinblick auf das Nachschleifen gefördert wird.

Eine für die Fertigung besonders günstige Form der Messerklingen ergibt sich dadurch, daß die Messerklingen im Grundriß im wesentlichen trapezförmig ausgebildet sind.

Gemäß einer weiteren besonders bevorzugten Ausführungsform des Erfindungsgegenstandes ist vorgesehen, daß die Messerklingen über ihre Fläche verteilt angeordnete Löcher aufweisen. Durch die Löcher in den Messerklingen wird die Strömung in der Weise beeinflußt, daß keine zu starke Verwirbelung auftritt. Die Löcher in den Messerklingen verhindern ein übermäßig starke Wirbelbildung, insbesondere dadurch, daß zwischen der Oberseite und der Unterseite an einer Messerklinge ein Druckausgleich herbeigeführt werden kann. Diese Ausführungsform des Erfindungsgegenstandes bietet den überraschenden Vorteil, daß durch geringere Wirbelbildung das Granulat besonders geschont wird. Die Erfindung bedient sich nämlich auch der Erkenntnis, daß durch eine stark verwirbelte Strömung die Granulat-Teilchen einer starken Reibung aneinander ausgesetzt werden. Dadurch werden die Kanten an den Granulat-Teilchen abgeschliffen. Dabei entsteht neben den erwünschten Granulat-Teilchen ein unerwünschter Pulver-Staub. Die Bildung eines derartigen Pulver-Staubes kann in überraschender Weise durch Löcher in den Messerklingen außerordentlich stark reduziert werden.

Die Erfindung wird nachfolgend beispielsweise anhand der Zeichnung beschrieben; in dieser zeigen:
- Fig. 1: einen schematischen Vertikalschnitt durch eine Extrusionsmaschine, welche mit einem erfindungsgemäßen Schneidwerkzeug ausgestattet ist, und
- Fig. 2: eine Draufsicht auf ein erfindungsgemäßes Schneidwerkzeug.

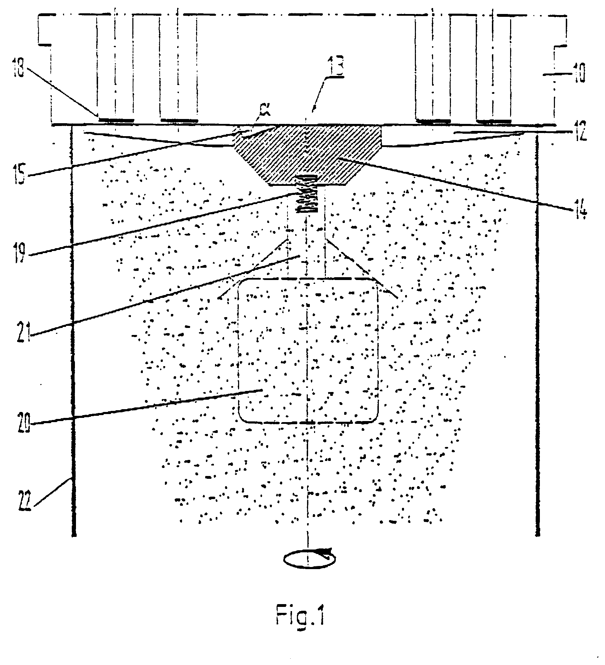

Die Fig. 1 zeigt einen Teil einer Extrusionsmaschine, und zwar ein Formwerkzeug 10, welches rein schematisch angedeutete Kanäle 18 aufweist, durch welche Material ausgepreßt werden kann. Die Kanäle 18 können beispielsweise einen runden Querschnitt haben, dessen Durchmesser in der Größenordnung von etwa einem Millimeter liegt. Es können natürlich auch andere Querschnittsformen verwendet werden. Die Querschnittsform der Kanäle 18 hängt davon ab, welche Produkte verarbeitet werden und welche Formen die Endprodukte aufweisen sollen.

Unterhalb des Formwerkzeuges 10 ist ein Schneidwerkzeug 11 angeordnet. Das Schneidwerkzeug 11 weist im zentralen Bereich eine Nabe 14 auf, in welcher radial nach außen stehende Messerklingen 12 gehalten sind.

Das Schneidwerkzeug 11 wird über eine Antriebswelle 21 mit Hilfe eines Motors 20 in Drehung versetzt. Die Drehzahl kann bis zu etwa eintausend Umdrehungen pro Minute betragen. Natürlich können auch geringere Drehzahlen verwendet werden. Die jeweils geeignete Drehzahl ergibt aus der Konstruktion der Extrusionsmaschine einerseits und den Eigenschaften des jeweils verarbeiteten Materials anderseits.

In einer alternativen Ausführungsform könnte an der Stelle des Motors 20 auch ein Winkelgetriebe angeordnet sein, welches über eine - in der Darstellung der Fig. 1 - horizontale Antriebswelle mit einem außerhalb eines in der Fig. 1 mit 22 bezeichneten Ausfallrohres angeordneten Motor verbunden sein könnte.

In der Darstellung der Fig. 1 ist das Schneidwerkzeug 11 um eine Mittelachse drehbar, die durch eine strich-punktierte Linie veranschaulicht ist.

Die Messerklingen 12 des Schneidwerkzeugs 11 werden gemäß der Darstellung in Fig. 1 durch eine Druckfeder 19 nach oben an das Formwerkzeug leicht angedrückt. Dadurch soll erreicht werden, daß die Schneiden der Messerklingen 12 an der unteren Fläche des Formwerkzeuges 10 auf einer Kreisbahn entlanggeführt werden, wobei die Schneiden derart an die Fläche des Formwerkzeuges angedrückt werden, daß die Messerklingen ständig beim Betrieb der Maschine nachgeschliffen werden.

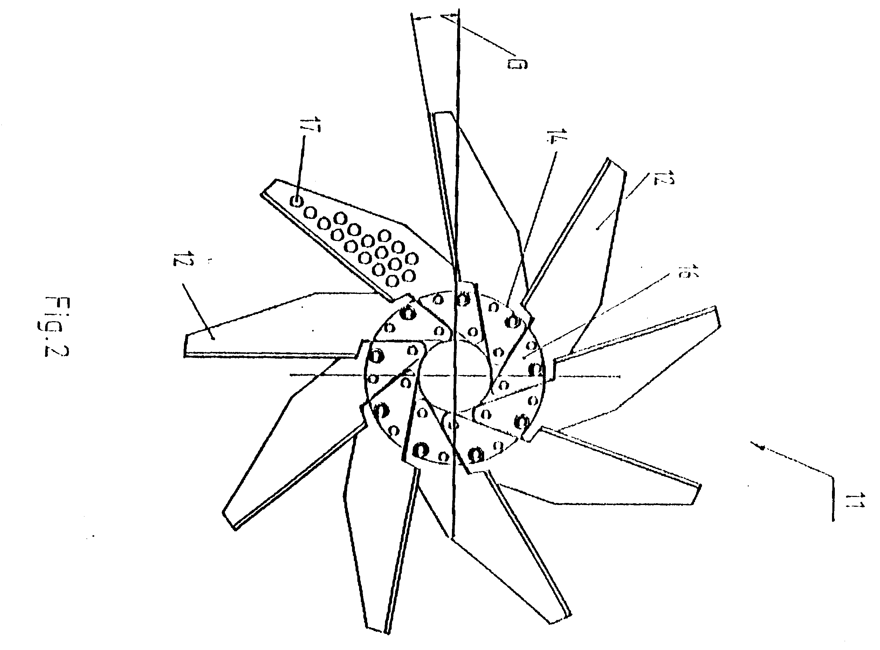

Die Fig. 2 zeigt einen Grundriß des erfindungsgemäßen Schneidwerkzeuges, welches in seiner Gesamtheit mit dem Bezugszeichen 11 bezeichnet ist. Im zentralen Bereich des Schneidwerkzeuges 11 ist die Nabe 14 erkennbar, an welcher die Messerklingen 12 angebracht sind. Zur Anbringung der Messerklingen 12 am Schneidwerkzeug 11 ist eine insgesamt mit 13 bezeichnete Messerhalterung vorgesehen, die folgendermaßen aufgebaut ist: Es sind zur Lagerung der Messerklingen 12 an der Nabe 14 des Schneidwerkzeugs 11 aus der Fig. 1 ersichtliche Auflageflächen 15 ausgebildet. Die Auflageflächen 15 weisen gegenüber der - gemäß der Darstellung in Fig. 1 horizontalen - Rotationsebene des Schneidwerkzeugs 11 einen Anstellwinkel α auf. Genauer gesagt, es sind die Auflageflächen 15 gegenüber der Rotationsebene des Schneidwerkzeugs 11 unter einem bestimmten Winkel geneigt. Wenn die Messerklingen 12 auf diese Auflageflächen 15 aufgelegt werden, wird dabei erreicht, daß die Messerklingen 12 gegenüber der Rotationsebene des Schneidwerkzeugs 11 einen Anstellwinkel α haben. Die Befestigung der Messerklingen 12 auf den Auflageflächen 15 an der Nabe 14 wird dadurch erreicht, daß auf die Messerklingen 12 Klemmkeile 16 aufgelegt werden, die mit der Nabe 14 verschraubt werden. Auf diese Weise werden die Messerklingen 12 zwischen den Auflagefläche 15 und den Klemmkeilen 16 festgeklemmt. Die Klemmkeile 16 sind in der Fig. 2 in der Draufsicht dargestellt.

Durch die beschriebene Messerhalterung 13 sind die Messerklingen 12 nur im zentralen Bereich des als Flügelrad ausgebildeten Schneidwerkzeuges 11 gehalten und stehen frei radial nach außen.

Aus der Fig. 2 ist ersichtlich, daß die Schneidkanten der Messerklingen 12 nicht etwa auf einem Radius oder parallel zu einem Radius verlaufen, sondern gegenüber einem durch eine strichpunktierte Linie eingezeichneten Radius einen Vorpfeil-Winkel β aufweisen. Durch diese Vorpfeilung wird das Produkt, welches durch das Schneidwerkzeug 11 in kleine Teilchen zerschnitten wird, in überraschender Weise beeinflußt. Genauer gesagt, es wird die Bahn der durch das Schneidwerkzeug 11 erzeugten Teilchen in der Weise beeinflußt, daß die Teilchen praktisch keine Tendenz mehr haben, an die Wand des Ausfallrohres 22 zu gelangen. Die Teilchen bekommen vielmehr eine Richtung, welche entweder im wesentlichen parallel zu der Achse des Ausfallrohres 22 verläuft oder sogar etwas zum zentralen Bereich des Ausfallrohres 22. Durch die Größe des Vorpfeil-Winkels β läßt sich die Bahn der vom Schneidwerkzeug 11 erzeugten Teilchen beeinflussen und in der Weise steuern, daß das Ausfallrohr 22 sauber bleibt.

Die Messerklingen 12 werden mit ihren Schneidkanten nicht nur durch die Druckfeder 19 an die Unterseite des Formwerkzeuges 10 angedrückt, eine zusätzliche Andruckkraft entsteht auch beim Betrieb der Extrusionsmaschine durch die Strömungskräfte und die Materialkräfte, welche auf die Messerklingen 12 dadurch wirken, daß die Messerklingen unter einem Anstellwinkel α auf ihrer Kreisbahn geführt werden. Es wirken somit zwei verschiedene Kraftkomponenten auf die Messerklingen 12, und zwar beide mit der Tendenz, die Messerklingen 12 an das Formwerkzeug 10 anzudrücken. Die eine Kraftkomponente ergibt sich durch die Druckfeder 19, und die andere Kraftkomponente entsteht durch die oben bereits angesprochenen Strömungs- und Material-Kräfte, die auf die unter dem Anstellwinkel α rotierenden Messerklingen 12 im Betrieb wirksam werden.

Aus der Darstellung der Fig. 2 ist auch ersichtlich, daß die Messerklingen 12 mit Löchern 17 versehen sein können. Durch diese Löcher 17 wird ein Druckausgleich zwischen der Oberseite und der Unterseite der Messerklingen 12 herbeigeführt. Im Ergebnis entstehen durch einen derartigen Druckausgleich weniger Wirbel, und es kann dadurch erreicht werden, daß insgesamt eine gleichmäßigere Strömung erreicht wird, die relativ geringe Turbulenzen aufweist. Durch die weitgehende Vermeidung von Turbulenzen wird gemäß der Erfindung eine Beschädigung der einzelnen Granulat-Teilchen erreicht, welche mit Hilfe des Schneidwerkzeuges 11 aus den Profilsträngen herstellt werden, welche aus den Kanälen 18 des Formwerkzeuges 10 ausgepreßt werden. Bei der Herstellung von Waschpulver können beispielsweise die Profilstränge auf etwa ein Millimeter Länge abgeschnitten werden, so daß kleine Granulat-Teilchen entstehen, welche die Form eines Zylinders aufweisen, der einen Durchmesser und eine Länge von jeweils etwa ein Millimeter hat. Da es erwünscht ist, die Kanten der Granulat-Teilchen zu erhalten, erweist es sich als besonders günstig, gemäß der Erfindung Turbulenzen in der Strömung und damit Reibungseffekte zwischen Granulat-Teilchen weitgehend zu vermindern.

Im praktischen Betrieb der erfindungsgemäßen Vorrichtung konnte festgestellt werden, daß das Ausfallrohr 22 auch über lange Betriebszeiten praktisch sauber bleibt, d.h. ohne nennenswerten Ansatz des verarbeiteten Produktes. Es werden somit gemäß der Erfindung nicht nur praktisch unversehrte Granulat-Teilchen erzeugt, sondern zugleich Produktionsunterbrechungen weitgehend vermieden, die bisher zum Reinigen des Ausfallrohres erforderlich waren.

## Patentansprüche

1. Schneidwerkzeug für eine Extrusionsmaschine, insbesondere zur Extrusion von chemischen Granulaten, vorzugsweise für Waschmittel, mit einem im Bereich einer Material-Austrittsöffnung angeordneten Formwerkzeug (10), dem das drehbar gelagerte Schneidwerkzeug (11) zugeordnet ist, welches nach Art eines Flügelsrades ausgebildet ist, bei dem mehrere Messerklingen (12) an einer Messerhalterung (13) angebracht und unter einer ebenen Auflagefläche (15) des Formwerkzeugs (10) auf einer Kreisbahn entlangführbar sind,
dadurch **gekennzeichnet**,
daß die Schneidkanten der Messerklingen (12) eine Vorpfeilung aufweisen.

2. Schneidwerkzeug nach Anspruch 1,
dadurch **gekennzeichnet**,
daß die Schneidkanten geradlinig ausgebildet sind, so daß der Vorpfeil-Winkel (β) über die Längsausdehnung der Schneidkanten konstant ist.

3. Schneidwerkzeug nach Anspruch 1 oder 2,
dadurch **gekennzeichnet**,
daß der Vorpfeil-Winkel (β) im Bereich von Null bis 20 Grad liegt.

4. Schneidwerkzeug nach einem der Ansprüche 2 oder 3,
dadurch **gekennzeichnet**,
daß der Vorpfeil-Winkel (β) etwa 10 Grad beträgt.

5. Schneidwerkzeug nach einem der vorhergehenden Ansprüche,
dadurch **gekennzeichnet**,
daß die Messerklingen (12) einen Anstellwinkel (α) aufweisen.

6. Schneidwerkzeug nach einem der vorhergehenden Ansprüche,
dadurch **gekennzeichnet**,
daß die Messerklingen (12) als dünne ebene Platten ausgebildet sind.

7. Schneidwerkzeug nach einem der vorhergehenden Ansprüche,
dadurch **gekennzeichnet**,
daß die Messerklingen (12) in ihrer Grundrißform radial nach außen verjüngt ausgebildet sind.

8. Schneidwerkzeug nach Anspruch 7,
dadurch **gekennzeichnet**,
daß die Messerklingen (12) im Grundriß im wesentlichen trapezförmig ausgebildet sind.

9. Schneidwerkzeug nach einem der vorhergehenden Ansprüche,
dadurch **gekennzeichnet**,
daß die Messerklingen (12) über ihre Fläche verteilt angeordnete Löcher (17) aufweisen.

## Claims

1. Cutting tool for an extrusion machine, particularly for extruding chemical granules, preferably detergents, with a mould (10) located in the vicinity of a material discharge opening and with which is associated the cutting tool (11) mounted in rotary manner and which is constructed in the manner of an impeller, in which several blades (12) are fitted to a blade holder (13) and can be guided along a circular path below a planar bearing surface (15) of the mould (10), characterized in that the cutting edges of the blades (12) have a negative sweep.

2. Cutting tool according to claim 1, characterized in that the cutting edges have a linear construction, so that the negative sweep angle (β) is constant over the longitudinal extension of the cutting edges.

3. Cutting tool according to claim 1 or 2, characterized in that the negative sweep angle (β) is in the range 0 to 20°.

4. Cutting tool according to one of the claims 2 or 3, characterized in that the negative sweep angle (β) is approximately 10°.

5. Cutting tool according to one of the preceding claims, characterized in that the blades (12) have a setting angle (α).

6. Cutting tool according to one of the preceding claims, characterized in that the blades (12) are constructed as thin, flat plates.

7. Cutting tool according to one of the preceding claims, characterized in that the plan view shape of the blades (12) is radially outwardly tapered.

8. Cutting tool according to claim 7, characterized in that in plan view the blades (12) are substantially trapezoidal.

9. Cutting tool according to one of the preceding claims, characterized in that she blades (12) have holes (17) distributed over their surface.

## Revendications

1. Outil de coupe pour extrudeuse, en particulier pour l'extrusion de granulés chimiques, de préférence de détergents, avec un outil de formage (10) placé au niveau d'une ouverture de sortie de la matière et auquel est associé l'outil de coupe (11) monté rotatif, lequel est conformé à la manière d'une roue à ailettes dans laquelle plusieurs lames (12) sont rapportées sur un support (13) de lames et peuvent être guidées sur une trajectoire circulaire sous une surface d'appui plane (15) de l'outil de formage (10), ***caractérisé en ce que*** les bords de coupe des lames (12) présentent une flèche avant.

2. Outil de coupe selon la Revendication 1, ***caractérisé en ce que*** les bords de coupe sont conformés rectilignes, de sorte que l'angle de flèche avant (β) est constant sur l'extension longitudinale des bords de coupe.

3. Outil de coupe selon la Revendication 1 ou 2, ***caractérisé en ce que*** l'angle de flèche avant (β) est compris entre zéro et 20 degrés.

4. Outil de coupe selon l'une quelconque des Revendications 2 ou 3, ***caractérisé en ce que*** l'angle de flèche avant (β) vaut approximativement 10 degrés.

5. Outil de coupe selon l'une quelconque des Revendications précédentes, ***caractérisé en ce que*** les lames (12) présentent un angle d'attaque (α).

6. Outil de coupe selon l'une quelconque des Revendications précédentes, ***caractérisé en ce que*** les lames sont conformées en plaques planes minces.

7. Outil de coupe selon l'une quelconque des Revendications précédentes, ***caractérisé en ce que*** les lames (12) ont une forme en plan effilée vers l'extérieur dans le sens radial.

8. Outil de coupe selon l'une quelconque des Revendications précédentes, ***caractérisé en ce que*** les lames (12) ont une forme en plan sensiblement trapézoïdale.

9. Outil de coupe selon l'une quelconque des Revendications précédentes, ***caractérisé en ce que*** les lames (12) présentent des trous (17) répartis sur leurs surfaces.
